# EUROPÄISCHE PATENTSCHRIFT

(11) **EP 0 740 091 B1**
(45) Veröffentlichungstag und Bekanntmachung des Hinweises auf die Patenterteilung: **25.11.1998**
(21) Anmeldenummer: 96110331.4
(22) Anmeldetag: 24.03.1993
(51) Int. Cl.: F16H 61/46, B60K 17/10

(54) **Hydrostatisches Getriebe**
Hydrostatic transmission
Transmission hydrostatique

(30) Priorität: 27.04.1992 DE 4213799
(43) Veröffentlichungstag der Anmeldung: 30.10.1996
(62) Teilanmeldung aus: 93104877.1
(73) Patentinhaber: BRUENINGHAUS HYDROMATIK GMBH, 89275 Elchingen (DE)
(72) Erfinder: Vogl, Karl-Heinz, 72160 Horb (DE); Belser, Roland, 7452 Haigerloch (DE)
(74) Vertreter: Körber, Wolfhart, Dr. rer.nat.

(56) Entgegenhaltungen:
- EP-A- 0 226 844
- DE-A- 2 643 180
- DE-A- 2 836 697
- DE-A- 3 400 885
- GB-A- 2 112 910
- US-A- 4 478 041
- PATENT ABSTRACTS OF JAPAN, unexamined applications, Sektion M, Band 14, Nr. 514, 13. November 1990 THE PATENT OFFICE JAPANESE GOVERNMENT Seite 63 M 1046; & JP-A-02 212 674 (HITACHI)

## Beschreibung

Die Erfindung betrifft ein hydrostatisches Getriebe.

Aus der US-A 4 478 041 ist ein hydrostatisches Getriebe mit einer Pumpe und einem Verstellmotor bekannt, dessen Schluckvolumen in Abhängigkeit von dem von ihm aufgenommenen Volumenstrom geregelt wird. Die Größe dieses Volumenstroms wird mit Hilfe einer Drossel erfaßt, die in einer der an den Verstellmotor angeschlossenen Druckmittelleitungen angeordnet ist. Der Druckabfall dieser Drossel wird als Differenzdruck der Regelvorrichtung zugeführt, die einen dem Druckabfall proportionalen Stelldruck erzeugt und mit diesem einen Stellzylinder zum Verstellen des Schluckvolumens des Verstellmotors beaufschlagt. Die Regelvorrichtung beinhaltet eine Umschaltfunktion, die dafür sorgt, daß unabhängig von der Richtung des Druckabfalls der Stellzylinder stets, d.h. sowohl im Lastbetrieb, also wenn die Pumpe den Verstellmotor antreibt, als auch im Schubbetrieb, wenn der Verstellmotor etwa bei Bergabfahrt den Antrieb der Pumpe übernimmt, in Richtung einer Verringerung des Schluckvolumens des Verstellmotors und damit einer entsprechenden Verringerung des Übersetzungsverhältnisses des hydrostatischen Getriebes beaufschlagt ist. Im Schubbetrieb bedeutet die Verringerung des Übersetzungsverhältnisses eine Verringerung der in diesem Betriebszustand erwünschten hydraulischen Bremswirkung des hydrostatischen Getriebes.

Ein weiteres hydrostatisches Getriebe ist aus der EP-PS 0226 844 bekannt. Es ist als Fahrantrieb für ein Fahrzeug ausgebildet und weist eine Verstellpumpe sowie mehrere parallelgeschaltete Verstellmotoren auf, die hinsichtlich ihres Schluckvolumens in Abhängigkeit vom Systemdruck im Leitungskreislauf und von der Drehzahl der Verstellpumpe gemeinsam geregelt werden. Das Drehzahlsignal ist ein von einem sog. DA-Regelventil erzeugtes Drucksignal, mit dem über entsprechende Signalleitungen die aus einzelnen, den Verstellmotoren jeweils zugeordneten Regeleinrichtungen bestehende Regelvorrichtung sowie eine Regeleinrichtung der Verstellpumpe derart angesteuert werden, daß mit wachsender Drehzahl das Schluckvolumen der Verstellmotoren abnimmt und das Fördervolumen der Verstellpumpe zunimmt. Das DA-Regelventil ist an eine Hilfspumpe angeschlossen, die mit der Drehzahl der Verstellpumpe umläuft.

Der von der Verstellpumpe geförderte Volumenstrom nimmt den Weg des geringsten Widerstandes und wird dementsprechend von den Verstellmotoren in umgekehrtem Verhältnis zu dem von ihnen im Lastbetrieb jeweils aufgebrachten Antriebsmoment aufgenommen. Es besteht somit eine Differentialwirkung, die jedoch bei durchdrehenden Antriebsrädern mittels einer Antischlupfregelung aufgehoben wird. Diese Antischlupfregelung berücksichtigt die individuelle Belastung der Verstellmotoren, indem sie die Drehzahl sämtlicher Antriebsräder mißt, in einem elektronischen Steuergerät vergleicht und bei Überschreiten einer vorgegebenen Drehzahldifferenz den Verstellmotor des jeweils schneller drehenden Antriebsrades auf ein geringeres Schluckvolumen zurückschwenkt, indem sie über ein jeweils zugeordnetes Schaltventil die jeweilige Regeleinrichtung mit einem höheren Steuerdruck übersteuert. Folglich ist das vom zurückgeschwenkten Verstellmotor übertragbare Antriebsmoment und damit der Schlupf des zugeordneten Antriebsrades im Extremfall bis auf Null verringert.

Aus der EP-A 0530 842 ist ein reversierbares hydrostatisches Getriebe bekannt geworden, durch dessen Ausbildung ein größerer Bremsdruck zur Verfügung gestellt werden soll. Dieses Getriebe mit wenigstens einer Hydropumpe und wenigstens einem verstellbaren Hydromotor, der an zwei Arbeitsleitungen angeschlossen ist, von denen wenigstens eine zur Hydropumpe führt und dessen Stellglied zur Verstellung seines Verdrängungsvolumens mit einer Stelleinrichtung verbunden ist, die durch einen Stelldruck in einer an die Arbeitsleitungen angeschlossenen Stelldruckleitung in Richtung des maximalen Verdrängungsvolumens des Hydromotors beaufschlagbar ist, weist ein Bremsventil auf, das zwischen dem Hydromotor und den Anschlüssen der Stelldruckleitung an die Arbeitsleitungen in letzteren angeordnet ist und bei Schubbetrieb des hydrostatischen Getriebes den Querschnitt jeweils einer der Arbeitsleitungen zumindest teilweise schließt.

Es ist Aufgabe der Erfindung, ein hydrostatisches Getriebe ähnlich dem eingangs genannten Stand der Technik so weiterzubilden, daß es im Schubbetrieb eine größere Bremswirkung aufweist und bei Verwendung mehrerer Verstellmotoren deren Schluckvolumen unter Berücksichtigung ihrer Belastung mit geringerem konstruktiven Aufwand individuell regelt.

Diese Aufgabe wird durch die im Anspruch 1 aufgeführten Merkmale gelöst.

Bei Druckabfall in Richtung Pumpe befindet sich das hydrostatische Getriebe im Schubbetrieb und bei Druckabfall in umgekehrter Richtung im Lastbetrieb. Dementsprechend wird im letzteren Betriebszustand das hydrostatische Getriebe geringer übersetzt und damit seine Abtriebsgeschwindigkeit erhöht. Im Schubbetrieb hingegen vergrößert sich das Übersetzungsverhältnis und damit die in diesem Betriebszustand erwünschte hydraulische Bremswirkung des hydrostatischen Getriebes. Die erfindungsgemäße Regelung des Schluckvolumens des Verstellmotors erfolgt in Abhängigkeit vom Druckabfall über dem jeweiligen Bremsventil und damit von dem von der Pumpe geförderten Volumenstrom; infolgedessen werden in gleicher Weise wie im Stand der Technik die Drehzahl und das Fördervolumen der Pumpe berücksichtigt. Da außerdem bei einem mehrmotorigen Getriebe unterschiedliche Motorbelastungen unterschiedliche Druckabfälle hervorrufen, werden die einzelnen parallelgeschalteten Verstellmotoren unter Berücksichtigung ihrer Belastung individuell geregelt. Dadurch und durch die Ausbildung der Regelvorrichtung derart, daß sie jeden Verstellmotor im Lastbetrieb mit zunehmendem Druckabfall in Richtung kleineren Schluckvolumens verstellt, ergibt sich eine Antischlupfregelungsfunktion, jedoch ohne den konstruktiven Aufwand der aus dem Stand der Technik bekannten Antischlupfregelung.

Die Erfindung ist sowohl für ein hydrostatisches Getriebe mit geschlossenem als auch mit offenem Kreislauf anwendbar. Im letzteren Fall ist das Bremsventil in dem zum Tank führenden Teil des Leitungskreislaufes angeordnet. Die Pumpe kann entweder als Verstellpumpe oder als eine mit veränderlicher oder konstanter Drehzahl antreibbare Konstantpumpe ausgebildet sein. Das hydrostatische Getriebe gemäß der Erfindung kann unter Wegfall der Leitungsabzweigungen und auch als einmotoriges Getriebe mit lediglich einem Verstellmotor ausgebildet sein.

Weitere Vorteile und Merkmale der Erfindung ergeben sich aus den Unteransprüchen.

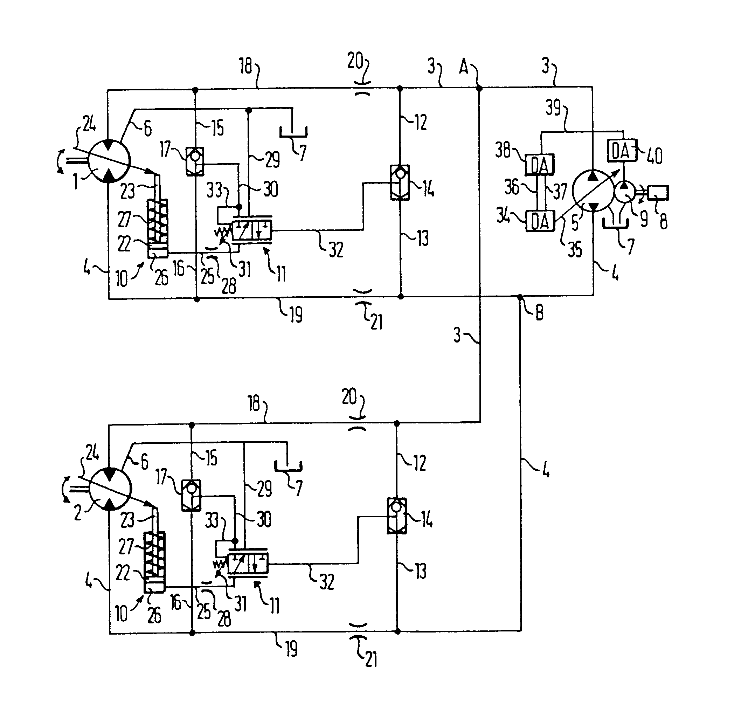

Nachstehend ist die Erfindung anhand eines Ausführungsbeispiels unter Bezugnahme auf den Schaltplan der einzigen Figur näher beschrieben.

Die Figur zeigt ein hydrostatisches Getriebe mit geschlossenem Leitungskreislauf als Fahrantrieb für ein Fahrzeug. Es umfaßt zwei Verstellmotoren 1, 2, die jeweils zwei Förderrichtungen aufweisen, jeweils wenigstens ein nicht gezeigtes Antriebsrad des ebenfalls nicht gezeigten Fahrzeugs antreiben und über je zwei, den Leitungskreislauf bildende Druckmittelleitungen 3, 4 mit je einer Verzweigung A bzw. B in Parallelschaltung an eine Verstellpumpe 5 angeschlossen sind. Das hydrostatische Getriebe umfaßt ferner eine Regelvorrichtung zur individuellen Regelung des Schluckvolumens der Verstellmotoren 1, 2. Über je eine Leckölleitung 6 sind diese Verstellmotoren 1, 2 an den Tank 7 angeschlossen.

Die Verstellpumpe 5 fördert in zwei Förderrichtungen; sie ist von einem Antriebsmotor 8, beispielsweise einem Dieselmotor veränderlicher Drehzahl, antreibbar und mittels einer eine Hilfspumpe 9 einschließenden sog. DA(drehzahlabhängigen)-Regelung in ihrem Fördervolumen regelbar. Eine solche DA-Regelung ist in der DE-A 40 16 518 beschrieben und weiter unten kurz umrissen. Die Verstellpumpe 5 und die Hilfspumpe 9 sind miteinander mechanisch gekoppelt und über entsprechende Leckölleitungen an den Tank 7 angeschlossen.

Die Regelvorrichtung umfaßt je eine jedem Verstellmotor 1, 2 zugeordnete Meß- und Regeleinrichtung bestehend aus zwei Meßstrecken, einem Stellzylinder 10 und einem Regelventil 11. Beide Meß- und Regeleinrichtungen sind identisch; der Einfachheit halber ist nachstehend lediglich die dem Verstellmotor 1 zugeordnete Einrichtung beschrieben.

Von den zwischen dem Verstellmotor 1 und den Leitungsverzweigungen A bzw. B liegenden Abschnitten der Druckmittelleitungen 3,4 führt je eine erste Verbindungsleitung 12 bzw. 13 zu einem Wechselventil 14 und je eine zweite Verbindungsleitung 15 bzw. 16 zu einem Wechselventil 17. Die jeweils zwischen den Einmündungen der Verbindungsleitungen 12 und 15 bzw. 13 und 16 in die Druckmittelleitungen 3 bzw. 4 gelegenen Teilstrecken der letzteren sind mit den Bezugszeichen 18, 19 bezeichnete Meßstrecken, in denen je ein nicht näher dargestelltes Bremsventil 20 bzw. 21 der aus EP-A 0530 842 bekannten Art angeordnet ist, das nur als Drossel entsprechend seines Einflusses auf den Volumenstrom dargestellt ist. Die zweiten Verbindungsleitungen 15, 16 münden näher zum Verstellmotor 1 als die ersten Verbindungsleitungen 12,13 in die jeweiligen Druckmittelleitungen ein.

Der Stellzylinder 10 ist ein einfachwirkender Zylinder mit einem Kolben 22, der über eine Kolbenstange 23 mit dem für die Verstellung des Schluckvolumens vorgesehenen Stellglied 24 des Verstellmotors 1 gekoppelt ist. Der Kolben 22 definiert mit seiner größeren, kreisförmigen Kolbenfläche einen an eine Stelldruckleitung 25 angeschlossenen Druckraum 26 und mit seiner kleineren, ringförmigen Kolbenfläche einen Federraum, in dem eine Spannfeder 27 angeordnet ist. Letztere beaufschlagt den Kolben 22 in Richtung Verringerung des Druckraums 26 und damit Vergrößerung des Schluckvolumens des Verstellmotors 1. In der Stelldruckleitung 25 ist eine Blende 28 angeordnet.

Das Regelventil 11 ist ein drosselndes 3/2-Wegeventil mit zwei Steueranschlüssen und je einem Anschluß an die Stelldruckleitung 25, an eine zur Leckölleitung 6 führende Entlastungsleitung 29 sowie an eine Versorgungsleitung 30, die zum Wechselventil 17 in den zweiten Verbindungsleitungen 15,16 führt. Das 3/2-Wegeventil 11 ist durch eine einstellbare Druckfeder 31 in der in der Figur gezeigten (rechten) Ausgangsstellung gehalten und durch einen ersten Druck p₁ gegen den Druck der Druckfeder 31 in Richtung einer (linken) Regelstellung ansteuerbar. Zu diesem Zweck verbindet eine erste Steuerleitung 32 das Wechselventil 14 mit dem in der Figur rechten Steuerraum des 3/2-Wegeventils 11, während dessen in der Figur linker Steuerraum zwecks Heranführung eines zweiten Druckes p₂ über eine zweite Steuerleitung 33 an die zum Wechselventil 17 führende Versorgungsleitung 30 angeschlossen ist. Beide Drücke p₁, p₂ stellen den im Betrieb des hydrostatischen Getriebes an der jeweiligen Drosselstelle 20 bzw. 21 durch das dortige Bremsventil auftretenden Druckabfall Δp dar.

In der Ausgangsstellung des 3/2-Wegeventils 11 ist der Anschluß an die Versorgungsleitung 30 gesperrt, während die beiden verbleibenden Anschlüsse miteinander verbunden sind. In der Regelstellung sind die Anschlüsse an die Stelldruckleitung 25 und die Versorgungsleitung 30 geöffnet, während der Anschluß an die Entlastungsleitung 29 gesperrt ist.

Die nicht näher gezeigte DA-Regelung der Verstellpumpe 5 umfaßt einen federzentrierten, doppeltwirkenden, gleichgängigen Stellzylinder 34, der mit dem Stellglied 35 der Verstellpumpe 5 gekoppelt ist. Die beiden Druckräume des Stellzylinders 34 sind über je eine Steuerdruckzweigleitung 36,37 an ein Fahrtrichtungsventil 38 angeschlossen, von dem aus eine Steuerdruckleitung 39 zu einem Differenzdruckregelventil 40 mit vorgeschalteter Blende führt, welches an die Hilfspumpe 9 angeschlossen ist. In jeder Einstellung des Fahrtrichtungsventils und damit Wahl der Fahrtrichtung wird der entsprechende Druckraum des Stellzylinders mit einem der Drehzahl der Hilfspumpe 9 und damit der Verstellpumpe 5 proportionalen Steuerdruck beaufschlagt und in Richtung maximalen Fördervolumens ausgeschwenkt. Statt dieser DA-Regelungen können auch andere bekannte Regelungen (aber auch Steuerungen) eingesetzt werden, wie etwa die Druckregelung oder die Leistungsregelung, die das Fördervolumen der Verstellpumpe 5 in Abhängigkeit vom jeweils höheren Druck (Arbeitsdruck) in den Druckmittelleitungen 3,4 so einstellen, daß der Arbeitsdruck bzw. die Leistung der Verstellpumpe 5 konstant gehalten werden.

Die Funktion des erfindungsgemäßen hydrostatischen Getriebes ist wie folgt: Bei Leerlaufdrehzahl des Antriebsmotors 8 sind die Verstellpumpe 5 auf minimales Fördervolumen und die Verstellmotoren 1,2 entsprechend der in der Figur gezeigten Stellung der Stellzylinder 10 sowie der Regelventile 11 auf maximales Schluckvolumen eingestellt.

Die Verstellpumpe 5 wird mit zunehmender Drehzahl des Antriebsmotors 8 kontinuierlich auf größeres Fördervolumen ausgeschwenkt und fördert einen entsprechenden, die Verstellmotoren 1,2 in Drehung versetzenden, druckbeladenen Volumenstrom in den Druckmittelleitungen 3 - beispielsweise bei gewählter Fahrtrichtung "vorwärts" -. Der Rückfluß des Volumenstroms zur Verstellpumpe 5 erfolgt nahezu drucklos über die Druckmittelleitungen 4. Das Fahrzeug fährt; sein hydrostatisches Getriebe befindet sich im Primärverstellungsbereich, in welchem die Änderung seines Übersetzungsverhältnisses lediglich durch die Verstellung der Verstellpumpe 5 erfolgt.

An den Bremsventilen 20 in den Druckmittelleitungen 3 entsteht jeweils ein dem jeweiligen druckbeladenen Volumenstrom proportionaler Druckabfall (Druckdifferenz) Δp. Der in Strömungsrichtung hinter den Bremsventilen 20 herrschende Druck p₂ ist der Verbraucherdruck, der dem Antriebsmoment des jeweiligen Verstellmotors 1 bzw. 2 entspricht. Über die zweiten Verbindungsleitungen 15, die Wechselventile 17, die Versorgungsleitungen 30 und die zweiten Steuerleitungen 33 werden die Regelventile 11 mit diesem Verbraucherdruck p₂ angesteuert, so daß sie in ihrer Ausgangsstellung verbleiben. Der in Strömungsrichtung vor den Bremsventilen 20 herrschende Druck p₁ ist gleich dem Verbraucherdruck p₂ plus dem Druckabfall (Druckdifferenz) Δp. Dieser Druck p₁ beaufschlagt über die ersten Verbindungsleitungen 12, die Wechselventile 14 und die ersten Steuerleitungen 32 die Regelventile 11 in Richtung Regelstellung.

Wenn die Verstellpumpe 5 auf nahezu maximales Fördervolumen ausgeschwenkt ist, liefert sie einen Volumenstrom, der bei gleichmäßiger Aufteilung an der Abzweigung A an jedem Bremsventil 20 eine Druckdifferenz Δp erzeugt, die den eingestellten Druck der jeweiligen Druckfeder 31 übersteigt und das jeweils zugeordnete Regelventil 11 in seine Regelstellung verschiebt, in der der Verbraucherdruck p₂ über die jeweilige zweite Verbindungsleitung 15, das Wechselventil 17, die Versorgungsleitung 30 und die Stelldruckleitung 25 dem Druckraum 26 des jeweiligen Stellzylinders 10 zugeführt wird und die Verstellmotoren 1,2 in Richtung kleineren Schluckvolumens zurückschwenkt. Das hydrostatische Getriebe befindet sich im Sekundärverstellungsbereich. Mit zunehmender Drehzahl des Antriebsmotors 8 und damit des von der Verstellpumpe 5 gelieferten Volumenstroms wird das Übersetzungsverhältnis des hydrostatischen Getriebes durch weiteres Zurückschwenken der Verstellmotoren 1,2 bis auf ihr minimales Schluckvolumen verringert.

Solange die Haftreibungsgrenze zwischen Antriebsrädern und Fahrbahn nicht überschritten wird, drehen bei Geradeausfahrt sämtliche Antriebsräder mit gleicher Drehzahl, so daß sich der von der Verstellpumpe 5 gelieferte Volumenstrom an der Abzweigung A (bei Vorwärtsfahrt) im gleichen Verhältnis aufteilt. Dementsprechend sind die Verstellmotoren 1,2 auf gleiche Schluckvolumina eingestellt.

Bei Kurvenfahrt ändern sich die Größenverhältnisse der beiden Volumenströme und damit die Druckdifferenzen Δp an den Bremsventilen 20 entsprechend dem Drehzahlunterschied zwischen dem kurvenäußeren und dem kurveninneren Antriebsrad. Dementsprechend wird der das kurvenäußere Antriebsrad antreibende, also schneller drehende Verstellmotor auf kleineres Schluckvolumen und der das kurveninnere Antriebsrad antreibende, also langsamer drehende Verstellmotor auf größeres Schluckvolumen verstellt. Diese Verstellung erfolgt innerhalb des Verstellbereichs beider Verstellmotoren so lange, bis beide gleiche Volumenströme aufnehmen. Falls jedoch beide Verstellmotoren 1,2 entweder auf minimales oder auf maximales Schluckvolumen eingestellt sind, erfolgt keine Verstellung ihrer Schluckvolumina.

Wenn bei Geradeaus- oder Kurvenfahrt auf glatter Fahrbahn eines der Antriebsräder die Haftreibungsgrenze überschreitet und dementsprechend durchdreht, nimmt der zugeordnete Verstellmotor, beispielsweise der Motor 1, den gesamten, von der Verstellpumpe 5 gelieferten Volumenstrom auf und wird durch die entsprechend große Druckdifferenz Δp an dem Bremsventil 20 auf Null-Schluckvolumen zurückgeschwenkt. Der Verstellmotor 1 gibt dementsprechend kein Drehmoment mehr ab, so daß das ihm zugeordnete Antriebsrad nicht mehr durchdreht, sondern mit einer der Geschwindigkeit des Fahrzeugs entsprechenden Drehzahl dreht (Antischlupfregelung).

Während des Durchdrehens des vom Verstellmotor 1 angetriebenen Antriebsrades erhält der Verstellmotor 2 keinen Volumenstrom und wird somit auf maximales Schluckvolumen ausgeschwenkt, so daß er sein maximales Antriebsmoment abgibt. Auf diese Weise wird einerseits erreicht, daß größere Fahrwiderstandsunterschiede ausgeglichen werden können und gleichzeitig weder eines der Antriebsräder durchdreht noch zum Stillstand kommt.

Wenn das hydrostatische Getriebe vom Last- in den Schubbetrieb wechselt, wenn also die Verstellmotoren 1,2 die Verstellpumpe 5 antreiben und der druckbeladene Volumenstrom von den Druckmittelleitungen 3 zu den Druckmittelleitungen 4 wechselt, wirken die Druckdifferenzen Δp an den Bremsventilen 20 gleichsinnig mit den Druckfedern 31 auf die Regelventile 11 und halten diese in der gezeigten Ausgangsstellung, in der die Verstellmotoren 1,2 durch die Spannfedern 27 in den Stellzylindern 10 auf maximales Fördervolumen ausgeschwenkt sind. Auf diese Weise wird die Bremsleistung des Antriebsmotors 8 voll ausgenutzt.

Die vorstehende Beschreibung gilt sinngemäß auch für die Rückwärtsfahrt, bei der die Verstellpumpe 5 durch die Druckmittelleitungen 4 fördert und der Rücklauf über die Druckmittelleitungen 3 erfolgt.

## Patentansprüche

1. Hydrostatisches Getriebe, insbesondere für einen Fahrantrieb, mit einem Leitungskreislauf (3,4), in dem wenigstens eine Pumpe (5) und ein Verstellmotor oder mehrere parallelgeschaltete Verstellmotoren (1,2) mit einer Regelvorrichtung (10,11,18-21) zum Regeln des Schluckvolumens des oder jeden Verstellmotors angeordnet sind, bei dem die Regelvorrichtung (10,11,18-21) an je eine Teilstrecke (18 und 19) des Leitungskreislaufs (3,4) sowohl vor als auch nach dem oder jedem Verstellmotor (1,2) angeschlossen sowie zum Messen des Druckabfalls (Δp) auf der mit dem jeweils höheren Druck belasteten Teilstrecke (18 bzw. 19) vor bzw. nach dem oder jedem Verstellmotor (1,2) ausgebildet ist und diesen Verstellmotor (1,2) mit Zunahme des gemessenen Druckabfalls (Δp) in Richtung der Pumpe (5) auf größeres Schluckvolumen und mit zunehmendem Druckabfall (Δp) in umgekehrter Richtung auf kleineres Schluckvolumen regelt, wobei in jeder Teilstrecke (18, 19) des Leitungskreislaufs (3, 4) ein Bremsventil (20, 21) zum Feststellen des Druckabfalls (Δp) angeordnet ist.

2. Hydrostatisches Getriebe nach Anspruch 1,
**dadurch gekennzeichnet,**
daß die Regelvorrichtung (10,11,18-21) eine bzw. je eine dem oder jedem Verstellmotor (1,2) zugeordnete Meß- und Regeleinrichtung (10,11,18,20; 10,11,19,21) umfaßt, die einen zwecks Verstellung des Schluckvolumens des Verstellmotors (1,2) mit dessen Stellglied (24) gekoppelten, mit einem Stelldruck beaufschlagbaren Stellzylinder (10) und ein Regelventil (11) zur Regelung der Stelldruckbeaufschlagung des Stellzylinders (10) aufweist, daß der Druckabfall (Δp) mit einem ersten Druck (p₁) und einem zweiten Druck (p₂) über eine erste und eine zweite Steuerleitung (32,33) von der jeweiligen Teilstrecke (18 bzw. 19) des Leitungskreislaufs (3,4) abgenommen wird und der erste Druck (p₁) in dem der Pumpe (5) näheren Teil der jeweiligen Teilstrecke (18 bzw. 19) das Regelventil (11) über die erste Steuerleitung (32) entgegen dem zweiten Druck (p₂) in der zweiten Steuerleitung (33) in Richtung einer Regelstellung beaufschlagt, in der es die Stelldruckbeaufschlagung des Stellzylinders (10) in Richtung kleineren Schluckvolumens des Verstellmotors (1,2) regelt.

3. Hydrostatisches Getriebe nach Anspruch 2,
**dadurch gekennzeichnet**,
daß das bzw. jedes Regelventil (11) durch eine Druckfeder (31) entgegen dem ersten Druck (p₁) beaufschlagt ist.

4. Fahrantrieb mit einem von einem Antriebsmotor antreibbaren hydrostatischen Getriebe nach wenigstens einem vorhergehenden Anspruch,
**dadurch gekennzeichnet**,
daß die Pumpe (5) als Verstellpumpe mit einer zugeordneten Regeleinrichtung (34,36,40) zur Verstellung ihres Fördervolumens ausgebildet ist.

## Claims

1. A hydrostatic transmission, in particular for a driving unit, comprising a line circuit (3, 4), in which there are arranged at least one pump (5) and one variable displacement motor or a plurality of variable displacement motors (1, 2), connected in parallel, with a control device (10, 11, 18-21) for controlling the capacity of the or of each variable displacement motor, the control device (10, 11, 18-21) being connected to sections (18 and 19) of the line circuit (3, 4) respectively upstream and downstream of the or each variable displacement motor (1, 2) and being designed to measure the pressure drop (Δp) at the section (18 or 19) loaded with the higher pressure respectively up- or downstream of the or each variable displacement motor (1, 2) and to control this variable displacement motor (1, 2) in such a manner that its capacity is increased when the measured pressure drop (Ap) rises in the direction of the pump (5) and decreased when the pressure drop (Ap) rises in the opposite direction, wherein a brake valve (20, 21) is arranged in each section (18, 19) of the line circuit (3, 4) for establishing the pressure drop (Δp).

2. A hydrostatic transmission according to claim 1,
characterised in that
the control device (10, 11, 18-21) comprises a measuring and control means (10, 11, 18, 20; 10, 11, 19, 21) associated respectively with the or each variable displacement motor (1, 2), which measuring and control means (10, 11, 18, 20; 10, 11, 19, 21) comprises a control cylinder (10), to which an actuating pressure may be applied and which is coupled to the final control member (24) of the variable displacement motor (1, 2) for the purpose of adjustment of the capacity thereof, and a control valve (11) for controlling the actuating pressure applied to the control cylinder (10), in that the pressure drop (Δp), comprising a first pressure (p₁) and a second pressure (p₂), is extracted from the respective section (18 or 19) of the line circuit (3, 4) via a first and a second control line (32, 33) and the first pressure (p₁) in the part of the respective section (18 or 19) nearer the pump (5) is applied to the control valve (11) via the first control line (32) against the second pressure (p₂) in the second control line (33) in the direction of a control position in which said control valve (11) controls the actuating pressure applied to the control cylinder (10) in such a manner as to reduce the capacity of the variable displacement motor (1, 2).

3. A hydrostatic transmission according to claim 2,
characterised in that
the or each control valve (11) is acted upon counter to the first pressure (p₁) by a compression spring (31).

4. A driving unit comprising a hydrostatic transmission, drivable by a drive motor, according to at least one of the preceding claims,
characterised in that
the pump (5) takes the form of a variable displacement pump with an associated control means (34, 36, 40) for adjusting its volumetric delivery.

## Revendications

1. Transmission hydrostatique en particulier pour un système de propulsion, comportant un circuit de conduites (3, 4), dans lequel sont prévus au moins une pompe (5) et un moteur à cylindrée variable ou plusieurs moteurs à cylindrée variable (1, 2) montés en parallèle, avec un dispositif de régulation (10, 11, 18 à 21) pour la régulation du volume d'absorption du ou de chaque moteur à cylindrée variable, transmission dans laquelle le dispositif de régulation (10, 11, 18 à 21) est raccordé à chaque tronçon (18 et 19) du circuit de conduites (3, 4), en amont comme en aval du ou de chaque moteur à cylindrée variable (1, 2) et est conçu pour la mesure de la chute de pression (Δp) sur le tronçon (18 ou 19) soumis chaque fois à la pression la plus élevée, en amont ou en aval du ou de chaque moteur à cylindrée variable (1, 2) et règle ce moteur à cylindrée variable (1, 2), lorsque la chute de pression (Δp) mesurée augmente en direction de la pompe (5), sur un plus grand volume d'absorption et, lorsque la chute de pression (Δp) augmente dans le sens inverse, il le règle sur un plus petit volume d'absorption, un robinet de freinage (20, 21) étant disposé dans chaque tronçon (18, 19) du circuit de conduites (3, 4), pour établir la chute de pression (Δp).

2. Transmission hydrostatique selon la revendication 1, caractérisée en ce que le dispositif de régulation (10, 11, 18 à 21) comprend, pour associer chaque moteur à cylindrée variable (1, 2), un dispositif de mesure et de régulation (10, 11, 18, 20; 10, 11, 19, 21), qui comporte un vérin de réglage (10) pouvant recevoir une pression de réglage et accouplé, pour le réglage du volume d'absorption du moteur à cylindrée variable (1, 2), à l'organe de réglage (24) de celui-ci, ainsi qu'une soupape de régulation (11) pour la régulation de l'alimentation en pression de réglage du vérin de réglage (10), en ce que la chute de pression (Δp) entre une première pression (p₁) et une deuxième pression (p₂) est prélevée, par une première et une deuxième conduite de commande (32, 33), du tronçon (18 ou 19) respectif du circuit de conduites (3, 4) et la première pression (p₁), dans la partie du tronçon (18 ou 19) respectif qui est la plus proche de la pompe (5), sollicite la soupape de régulation (11), par l'intermédiaire de la première conduite de commande (32), à l'encontre de la deuxième pression (p₂) régnant dans la deuxième conduite de commande (33), en direction d'une position de régulation, dans laquelle elle règle l'alimentation en pression de réglage du vérin de réglage (10) dans le sens d'un plus petit volume d'absorption du moteur à cylindrée variable (1, 2).

3. Transmission hydrostatique selon la revendication 2, caractérisée en ce que la ou chaque soupape de régulation (11) est soumise à l'action d'un ressort de compression (31), agissant à l'encontre de la première pression (p₁).

4. Système de propulsion comportant une transmission hydrostatique, pouvant être entraînée par un moteur d'entraînement, selon l'une au moins des revendications précédentes, caractérisé en ce que la pompe (5) est conformée en pompe à cylindrée variable avec un dispositif de régulation (34, 36, 40) correspondant pour le réglage de son volume déplacé.
